# EUROPEAN PATENT APPLICATION

(11) **EP 1 061 711 A2**
(43) Date of publication of application: **20.12.2000**
(21) Application number: 99126174.4
(22) Date of filing: 29.12.1999
(51) Int. Cl.: H04L 29/06, H04L 29/12

(54) **Computer network and method of clustering network servers**

(30) Priority: 16.06.1999 JP 17035399
(71) Applicant: Idgate Co., Ltd., Tokyo (JP)
(72) Inventor: Fukui, Masahiro, Tokyo (JP)
(74) Representative: Goddar, Heinz J., Dr.

(57) **Abstract**

A computer network comprises a client managing the positions on the network of a plurality of servers with one server name; a name server being installed in each of the plurality of servers and managing unique server names assigned to the servers and their corresponding addresses each of the servers being provided with the name server; means for inquiring the address of the server with which communication is desired by the client in the order of priority as first server, second server, ..... , the client being provided with the inquiring means; and a conversion table for giving its own address of the name server in response to address inquiries from the client, the name server being provided with the conversion table. If there is no response from the first server to the address inquiry by the client, the inquiring means asks the second server for its address.

## Description

### Field of the Invention

This invention relates to a computer network and a method of clustering network servers having a plurality of servers capable of providing identical services, a client using said services provided by at least one of the servers, wherein, when the first server becomes unable to provide the services, a second server provides the identical services.

### Backgrounds of the Invention

In a computer network having a plurality of mutually connected computers that constitutes a distributed system based on the client-server model, servers provide services to clients. In such computer network, it is important to secure fault transparency that makes users unnecessarily aware of faults that occur to the network or the plurality of computers (nodes). For this purpose, techniques of increasing availability by using a clustering method is adopted. According to such clustering method, a plurality of servers that can provide identical services are provided and if a first server becomes unable to provide services, a second server provides the identical services. Meanwhile, in networks using an internet protocol typified by a UNIX network, TCP/IP protocol is adopted as the de facto standard.

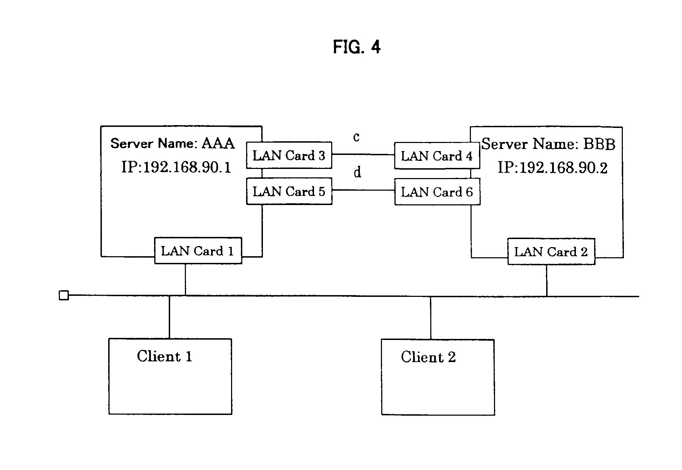

Fig. 4 shows a computer network using this conventional clustering method formed based on the TCP/IP protocol. Two servers AAA and BBB, which are connected to the network and able to provide the identical services, are assigned different IP addresses (internet protocol addresses). These different IP addresses are assigned to these servers because if there were an overlapping assignment of IP addresses at a given time, a plurality of MAC addresses would correspond to a single IP address, and sender would not be able to decide which MAC address to be specified when sending a packet. In a normal condition, LAN card 2 (also called the NIC, or network interface card) of the server BBB is placed in an inactive state. The active-system server AAA and the standby-system server BBB monitor each other's operating conditions by heartbeat communication established by a LAN card 3, a LAN card 4, and a communication path c. Consequently, the standby-system server BBB is basically in the standby state, but hardware and applications necessary for the heartbeat communication and for monitoring the server AAA are in the active state. This heartbeat communication is normally duplexed by a LAN card 5, a LAN card 6, and a communication path d to increase its reliability.

In this configuration, if circumstances arise such as the server AAA goes down or communication becomes impossible and it becomes impossible to provide service to the client 1 or the client 2, the standby-system server BBB recognizes this condition by means of the heartbeat communication, and then inherits the IP address of the active-system server AAA and sets the IP address as its own after the latter goes down. Consequently, because the server BBB has not started up the applications for providing services to clients while it is in the standby state, the time needed for the service switchover is longer.

The conventional clustering method described above is called a cold standby method. This method is subject to cost overrun because of its complicated configuration and specifications required for the hardware and software. That is to say, the active-system server and the standby-system server require the introduction of additional LAN cards, communication paths and software in order to handle the heartbeat communication, and the overall system becomes complicated. Since not only is the clustering software itself expensive, but the server must satisfy the same machine specifications in running the software, the overall system cost increases with the addition of said LAN cards (NICs). In addition, when the NICs needed for the heartbeat communication are added, the number of connecting points increases accordingly, so that the risk of faults increases. Further, mulfunction of the heartbeat communication can cause the standby-system server to switch over to an active state before the active-system server goes down, raising a possibility of conflict of IP addresses. This can cause the result that the reliability of the network is decreased. For this reason, those skilled in the art figure that the cost will increase according to the so-called "clustering equation": "cost is doubled for a 20% increase in reliability".

In addition, in the conventional method, the clustered servers are required to have the same machine specifications, so that the adoption of this method is difficult to network environment having mixed server machines of different performance levels or different types of server machines. For example, it is said to be particularly difficult to use this method when the operating system is relatively unproven to be used in an environment with a plurality of NICs. Consequently its range of applicability is limited.

### Summary of the Invention

The principal purpose of this invention is to provide a computer network and a method of clustering network servers that can reduce the time required for switching between servers to essentially zero, and, will permit a system providing high availability to be constructed at lower cost. Another purpose of this invention is to provide a computer network and a method of clustering network servers that depend little on the type or performance level of the server machines, and can be easily applied to a variety of network environments.

In order to accomplish the purposes described above, a computer network of the first invention comprises a plurality of servers, a client managing the positions of the plurality of servers among the network using one server name, a name server for managing unique server names assigned to each of the servers and their corresponding addresses, means for inquiring the address of a server with which communication is desired by the client among the plurality of servers in the order of priority as first server, second server, ..... , the client being provided with the inquiring means, and a conversion table for giving its own address of the name server in response to address inquiries from the client, the name server being provided with the conversion table, wherein the inquiring means asks the second server for its address if there is no response from the first server to the address inquiry from the client.

Moreover, a computer network of the second invention comprises a plurality of servers, a client managing the positions of the plurality of servers on the network using one server name, a first name server for managing unique server names assigned to each of the servers and their corresponding addresses, each of the servers being provided with the first name server, a second name server for managing each of the server names of the plurality of servers and the corresponding addresses, means for inquiring the address of the server with which communication is desired by the client in the order of priority among the plurality of servers as a first server, a second server, ..... , the client being provided with the inquiring means, and a conversion table for giving its own addresses of the first name server in response to the address inquiries from the clients, the first name server being provided with the conversion table; wherein the inquiring means asks the second server for its address if there is no response from the first server to the address inquiry from the client.

In the computer networks of the first and the second inventions, it is desirable that the servers and clients constitute a network that handles communication using an internet protocol that includes resolution of names and IP addresses by a domain name system (DNS). This makes it possible to achieve clustering in a network environment in which machines of a variety of types and performance levels, conforming to an internet protocol typified by TCP/IP, are mixed together.

In addition, if the service application provided by the server does not operate normally, such condition means that as if a fault occurred in the server itself to the clients using that service application. Therefore, it is desirable to switch over to another server that operates normally. However, there is a possibility in that even the server, in which a fault has occurred, has a name server that is still operating normally. As a result, there is a concern that the switchover will not take place immediately. To allow for a secured switchover, each of the servers is preferably provided with means for stopping response of each server to address inquiry from a client.

The computer networks of the first and second inventions can be applied flexibly to a variety of network environment. For example, a plurality of servers can be database servers, forming a distributed database system in which the data in the database are distributed among the plurality of servers, whereby the data and applications may be divided. This configuration contributes to improving data protection, and increasing reliability and availability of the database system, when the data in the database system are distributed in a redundant manner among the plurality of servers (the database servers).

In this invention, "server" refers to an ordinary server providing specified services to clients, while "name server" refers to a server (for example, a so-called domain name server) or software running on such server that manages server names (also called domain names or host names) and the corresponding addresses (for example, IP addresses).

### Brief Description of the Drawings

The invention will be explained in more detail in conjunction with appended drawings, wherein:
Fig. 1 is a operational block diagram showing a first embodiment of a computer network according this invention;
Fig. 2 is a flow chart showing the clustering function of the computer network shown in Fig. 1;
Fig. 3 is a operational block diagram showing a second embodiment of a computer network according to this invention; and
Fig. 4 is a block diagram showing a computer network using a conventional clustering method.

### Detailed Description of the Preferred Embodiments

Now the preferred embodiments of this invention will be described with reference to the drawings.

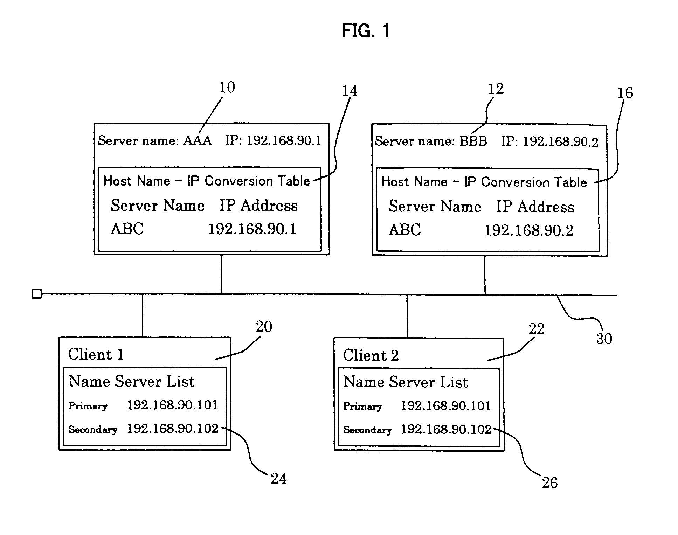

Fig. 1 is a functional block diagram showing the first embodiment of a computer network according to this invention. A first server 10 and A second server 12 that provide services, a client 20 and a client 22 that receive the services so provided, are connected to each other by the communication path 30, forming a LAN that uses TCP/IP as an internet protocol. The first server 10 is assigned an unique server name "AAA" and the corresponding IP address '192.168.90.1", while the second server 12 is assigned an unique server name "BBB" and the corresponding IP address '192.168.90.2".

In most cases, TCP/IP adopts a DNS (domain name system) as a system that automatically convert server names into IP addresses, in order to efficiently manage the correspondence between server names (corresponding to the internet term "host names") and IP addresses. In this embodiment, both the first server 10 and the second server 12 that provide services have such software installed that operates this DNS function, so that both servers can function as name servers. A portion of each server that has this kind of function will be hereinafter referred to as a "name server section".

In Fig. 1, the name server sections of the servers 10 and 12 have host name - IP conversion tables 14 and 16, respectively. The host name - IP conversion table 14 is a list that associates an identical server name "ABC" that is used to substitute for the unique server name "AAA" assigned to the server 10 with the assigned unique IP address '192.168.90.1". Meanwhile, the host name - IP conversion table 16 is a list that associates the identical server name "ABC" that is used to substitute for the unique server name "BBB" assigned to the server 12 with the assigned unique IP address "192.168.90.2". Each name server sections manages the list.

Meanwhile, the software for operating the DNS function described above is installed on the clients 20 and 22, whereby only the single server name "ABC" is managed as the server name of the server that provides the services. The clients 20 and 22 have name server lists 24 and 26 in which the name server inquiry destinations are set by "primary" and "secondary", whereby asking the primary and secondary servers in order for the IP address of the server being connected. Here, the name server lists 24 and 26 are set to inquire of the name server section of the server 10 as the primary candidate ("primary"), and of the name server section of the server 12 as the secondary candidate ("secondary").

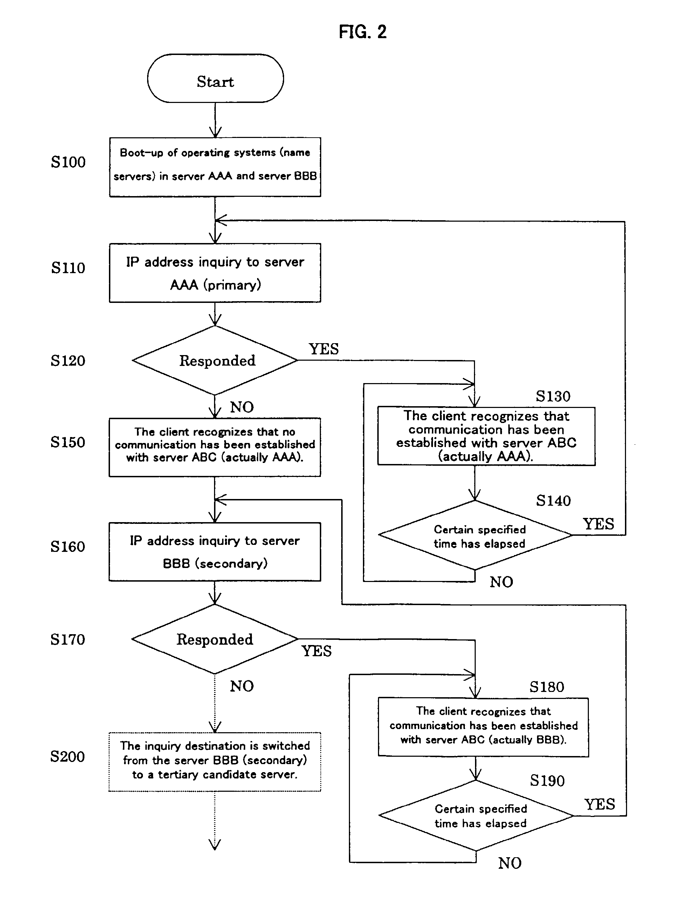

Now the clustering operation in the computer network constructed as described above will be explained with reference to Fig. 2. First, in step S100, the server 10 (server name: AAA) and the server 12 (server name: BBB) are started to boot up the operating system. At this time, the name server sections of both servers start up the name server software, and the working application software to be used by the clients is started up at the same time. Next, in step S110, the client 20 inquires as to the IP address of the server 10, which is the primary name server, in accordance with the name server list 24. In step S120, when the server 10 is providing service normally, the name server section of the server 10 responds with its own IP address "192.168.90.1" for the server name ABC. If the server 10 were not providing service normally, for example if it were in system breakdown, the name server section would not give this response. In step S130, when the client 20 receives the IP address response from the server 10, the client 20 establishes communication with the server "ABC" and recognizes that service is being received normally. In step S140, until a certain time (for example 30 seconds) has elapsed since the previously mentioned IP address inquiry and the response, the client 20 recognizes that it is still in step S130, that is to say, that it is receiving service normally from the server ABC. Then, after the specified time has elapsed, it returns to step S110, and again asks the server 10 for the IP address. Then, as long as the server 10 is normal, the series of steps of step S120 → step S130 → step S140 → step S110 are repeated, so that the client 20 can continue to receive service from the server 10.

Next, if the server 10 stops providing service normally at a certain time, the name server section of the server 10 does not give an IP address in response in step S120, so that the client 20 cannot obtain the IP address of the server 10. Then, in step S150, the client 20 switches the destination of the IP address inquiry to the server 12 (server name: BBB), which is the name server of the secondary candidate ("secondary") in accordance with the name server list 24. In step S160, the client 20 asks the server 12 for its IP address. In step S170, when the server 12 is providing service normally, the name server section of the server 12 responds with its own IP address "192.168.90.2" for the server name "ABC". If the server 12 were not providing service normally, the name server section would not give this response. In step S180, when the client 20 receives the IP address response from the server 12, the client 20 establishes communication with "server ABC" and recognizes that it is receiving service normally. In step S190, until a certain time (for example 30 seconds) has elapsed since the IP address inquiry described above and the response to it, the client 20 remains in step S180, that is to say, it recognizes that it is receiving service normally from "server ABC". Then, when the specified time has elapsed, it returns to step S160, and again asks the server 12 for its IP address. Then, as long as the server 12 is normal, the series of steps of step S170 → step S180 → step S190 → step 160 are repeated, and the client 20 can continue to receive service from the server 12.

Furthermore, a third server, not shown in the figure, may be connected to the network. The server is configured similarly to the above-described servers 10 and 12, and the name server of the third server is set as a third candidate in the client's name server list. It is needless to say that a similar operation may take place in step S200, as shown by the dashed line, switching to the third server, then the client 20 continues to receive service.

In the computer network of the first embodiment according to this invention, name and IP address resolution of standard DNS, with which the internet protocol TCP/IP is usually provided, is used. As a result clustering operation can be done without using special hardware and software for heartbeat communication that has been required for 2 servers to monitor each other in a conventional system, whereby the system can be greatly simplified.

In addition, since it is not necessary to introduce special clustering software, the restrictions on the performance level and machine type specifications of the server machines are greatly relaxed so that this system can be used in a network environment in which server machines of different machine types and performance levels are mixed. Consequently, a computer network that achieves clustering operation of high reliability can be constructed more flexibly and at lower cost.

Further, since working application software is run on 2 servers simultaneously, this system provides the advantage of "hot standby" system in which the waiting time for client service when switching from the first server to the second server is essentially zero.

According to the computer network of the first embodiment according to this invention, since the name server sections of the servers have the host name - IP address conversion tables in which one server name "ABC" and the unique IP addresses of the servers to be managed by the clients are set, it is not necessary for the clients to recognize that the server that is providing the service has switched from the server 10 (server name: AAA) to the server 12 (server name: BBB). Accordingly, if this computer network is taken as so-called a distributed system, it can be said to be a system of very high transparency, whereby the availability thereof is greatly increased.

Consequently, by using the servers 10 and 12 in the first embodiment as database servers, distributing the data in the database among these servers, a distributed database system of very high transparency can be constructed.

Here, even if the server becomes unable to provide normal service to the client, there would be a possibility in that the name server section would continue to operate normally. In such case, the responses in steps S120 and S170 would be given normally, so there would be a concern that the system would fail to switch from the server 10 to the server 12 or from the server 12 to the third candidate server. To deal with such case, the servers are preferably provided with means for stopping responses to the client's inquiry if the service application provided by the server is not operating normally. This means may include more specifically the following operations:

### (1) Work applications Correctly outputting operation log

Work applications that run on the server are usually designed to output error messages in a variety of circumstances. Those error messages are used to quickly assess the status. (Since the operation of the working applications themselves need not be directly linked to the clustering operation of this invention, there is little dependency on the clustering system or vice versa, making the system easy to construct).

### (2) Monitoring the operation log, identifying the server that has out put the error message and stopping its name server

A program for monitoring the operation log is being run. If an error message that makes the server impossible to continue operation is discovered (An identifiers of such error may be preset.), the name server of the server machine that output the error message (The machine may be identified by referring to the IP address included in the error message) will be stopped.

In this way, if trouble occurs, the name server of the malfunctioning server is forcibly stopped, and switching over to another server in step S150 or step S200 is done quickly.

In the computer network of the first embodiment described above, although the server is repeatedly asked for its IP address after a certain time elapses in step S140 or step S190, it is also possible to ask for the IP address in other ways. For example, the first inquiry can be made when a client receives a communication error message from the server. The way and timing of the inquiry are not restricted in this invention.

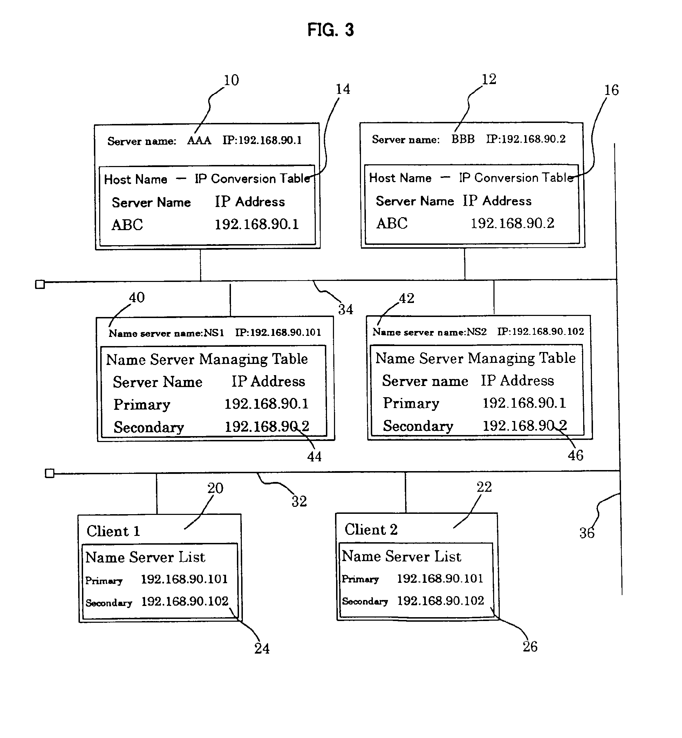

On the other hand, if a change occurs in the IP addresses of server machines that are subject to clustering due to the addition of a new server machine to the network, for example, the IP addresses may be managed and maintained by updating the host name - IP conversion table in the name server section of the servers and the name server list set up in the clients. However, if there are a large numberm of clients, one would concern that it would require a great deal of work to update the same name server list in all of the clients. This problem is easily resolved by a computer network of a second embodiment according to this invention shown in Fig. 3.

Referring now to Fig. 3, two sets of name servers 40 and 42 (name server names: NS1, NS2; IP addresses: 192.168.90.101, 192.168.90.102, respectively) are connected as exclusive use machines at intermediate points between the servers 10 and 12 and the clients 20 and 22 on the network that is connected by the communication paths 32, 34 and 36. The name servers are provided with identical name server managing tables 44 and 46 in which the IP addresses of the server 10 (server name: AAA) and the server 12 (server name: BBB) are set as the addresses of a primary candidate server and a secondary candidate server, respectively. The two name servers are used here to provide a duplexed system, increasing the reliability. On the other hand, in the name server lists of the clients 20 and 22, the IP address of the name server 40 "192.168.90.101" is set as a primary candidate ("primary"), while the IP address of the name server 42 "192.168.90.102" is set as a secondary candidate ("secondary") . Similar components in Fig. 3 are referred to similar reference numerals as used in Fig. 1.

In this configuration, the client 20 first knows and manage the IP address of the name server 40 as the primary candidate server, but does not know the IP address of the server 10 that provides the service, Therefore, the client 20 asks the server 10 for the IP address of the name server 40 first. When it does so, the name server 40 asks the primary candidate server, that is to say the server 10, for its IP address. The name server section of the server 10 gives in response its own IP address "192.168.90.1" as the IP address for the server name "ABC". The client 20 then recognizes that it has established communication with the server "ABC" (actually with the server 10, server name: AAA), and receives the service from the server 10. If the server 10 stops providing the service normally, the name server 40 asks the secondary candidate server, that is to say the server 12, for its IP address. The name server section of the server 12 responds by giving its own IP address "192.168.90.2" for the server name "ABC". In this way, the client 20 switches over by obtaining the IP address of the server 12, and receives the provided service from the server 12.

In the second embodiment, if, for example, the server 10 is replaced and the IP address changes, the name server managing tables in the name servers 40 and 42 need to be updated, while the clients' name server lists need not to be updated. Consequently, it is sufficient to manage and maintain the IP addresses in only the name servers 40 and 42, eliminating the troublesome work of updating the addresses in all of the clients, permitting flexible response to network environment changes.

In the computer network of this invention, it is possible to make use of data redundancy (disc mirroring) between working servers. That is to say, in contrast to the network that was used in the clustering method, the server machines do not change their own IP addresses, so that data can be exchanged between (main and auxiliary) servers at any time. This makes disc mirroring at all times possible. In addition, simultaneous operation is possible without problem even if the databases have identical names and contents. As a result, the computer network of this invention is very advantageous in constructing a distributed database system.

More specifically, mirroring can be done with various types of file systems and commercially available applications. In this case, since there is practically no relationship of dependence between the mirroring system and the clustering of this invention, there is no particular need to use a customized system, then it is sufficient to use commercially available mirroring software. Further, a duplex or updating operation of the database system (usually called dual mastering, parallel transaction, mirror DB, duplication or the like) can be used just as it operates.

In practice, many operating systems and platforms that have TCP/IP installed use a DNS (domain name system). Therefore, this invention can be used in a wide variety of network environment that uses such DNS.

As described above, the computer network and the method of clustering network servers of this invention have clients that administer the positions of a plurality of servers on a network with one server name; name servers that are established respectively in the plurality of servers for the purpose of administering the addresses corresponding to the unique server names that are assigned to the servers; means for inquiring that is installed in the clients and asks the name servers for the address of a server with which communication is desired among a plurality of servers in the order of priority as first server, second server, .....; and conversion tables that are installed in the respective name servers which then respond to inquiries from clients by giving their own addresses. This makes it possible to construct a system that reduces the switchover time between servers to essentially zero, at lower cost and with higher availability. In addition, the computer network and the method of clustering network servers of this invention do not depend on the machine types or performance levels of the server machines, making them easy to use in a wide variety of network environment, so that their technological significance may be greatly appreciated.

The preferred embodiments of the present invention have been disclosed by way of examples and it will be understood that other modifications may be occur to those skilled in the art without departing from the scope and the spirit of the appended claims.

The features disclosed in the foregoing description, in the claims and/or in the accompanying drawings may, both separately and in any combination thereof, be material for realising the invention in diverse forms thereof.

## Claims

1. A computer network having a plurality of servers capable of providing identical services, a client using said services provided by at least one of said servers wherein a second server provides the same service when a first server becomes incapable of providing said service, the computer network comprising:
a plurality of servers;
a client managing the positions of said plurality of servers among the network using one server name;
a name server for managing unique server names assigned to each of said servers and their corresponding addresses;
means for inquiring the address of a server with which communication is desired by said client among said plurality of servers in the order of priority as first server, second server, ..... , said client being provided with said inquiring means; and
a conversion table for giving its own address of said name server in response to address inquiries from said client, said name server being provided with said conversion table; wherein said inquiring means asks said second server for its address if there is no response from said first server to said address inquiry from said client.

2. A computer network having a plurality of servers capable of providing identical services, a client using said service provided by at least one of said servers wherein a second server provides the same service when a first server becomes incapable of providing said service, the computer network comprising:
a plurality of servers;
a client managing the positions of said plurality of servers on the network using one server name;
a first name server for managing unique server names assigned to each of said servers and their corresponding addresses, each of said servers being provided with said first name server;
a second name server for managing each of the server names of said plurality of servers and the corresponding addresses;
means for inquiring the address of the server with which communication is desired by said client in the order of priority among said plurality of servers as a first server, a second server, ..... , said client being provided with said inquiring means; and
a conversion table for giving its own addresses of said first name server in response to said address inquiries from said clients, said first name server being provided with said conversion table; wherein said inquiring means asks said second server for its address if there is no response from said first server to said address inquiry from said client.

3. A computer network as described in Claim 1 or Claim 2, wherein said servers and said clients constitute a network that handles communications using an internet protocol that includes resolution of names and IP addresses by a domain name system (DNS).

4. A computer network as described in Claim 1 through Claim 3, wherein said server is provided with means for stopping responses by said server to said address inquiry made by said client when a service application provided by said server is not operating normally.

5. A computer network as described in Claim 1 through Claim 4, wherein said plurality of servers are database servers forming a distributed database system in which the data in the database are distributed among said plurality of servers.

6. A method of clustering network servers in which a plurality of servers capable of providing identical services and a client using said service provided by at least one of said servers are provided, wherein a second server provides the same services when a first server becomes incapable of providing said services, the method comprising:
managing the positions on the network of a plurality of servers with one server name by a client;
managing unique server names assigned to said servers and their corresponding addresses by a name server on each of said servers;
asking said name server for the address of the server with which communication is desired by said client among said plurality of servers in the order of priority as first server, second server, ..... ;
giving its own address of said name server of each server in response to said address inquiry from said client by said name server;
asking said second server for the address if there is no response from said first server to said address inquiry from said client; and
receiving the services from said second server.

7. A method of clustering network servers in which a plurality of servers capable of providing identical services and a client using said service provided by at least one of said servers, wherein a second server provides the same services when a first server becomes incapable of providing said services, the method comprising:
managing the positions on the network of a plurality of servers with one server name by a client;
managing unique server names assigned to said servers and their corresponding addresses by a first name server of each server;
managing each of the server names and the corresponding addresses of said plurality of servers by a second name server on the network;
asking said second name server for the address of the server with which communication is desired by said client among said plurality of servers in the order of priority as first server, second server, .....,;
giving its own address of said first name server of each server in response to said address inquiry from said client by said first name server;
asking said second server for the address if there is no response from said first server to the address inquiry from said client; and
receiving the services from said second server.

8. A method of clustering network servers as described in Claim 6 or Claim 7, wherein said servers and said client constitute a network which handles communication using an internet protocol that includes name and IP address resolution by a domain name system (DNS).

9. A method of clustering network servers as described in Claim 6 through Claim 8, wherein said servers are provided with means for stopping responses to address inquiry from said client when service application provided by said servers is not operating normally.

10. A method of clustering network servers as described in Claim 6 through Claim 9, wherein said plurality of servers are database servers forming a distributed database system in which the data in the database are distributed among said plurality of servers.
